(19) Europäisches Patentamt
European Patent Office
Office européen des brevets

(11) **EP 4 738 514 A1**

(12) **EUROPEAN PATENT APPLICATION**
published in accordance with Art. 153(4) EPC

(43) Date of publication:
06.05.2026   Bulletin 2026/19

(21) Application number: 25822390.8

(22) Date of filing: 11.06.2025

(51) International Patent Classification (IPC):
H01M 10/0565 (2010.01)     H01M 50/451 (2021.01)
H01M 50/446 (2021.01)      H01M 50/417 (2021.01)
H01M 50/431 (2021.01)      H01M 10/052 (2010.01)
H01M 10/0585 (2010.01)

(52) Cooperative Patent Classification (CPC):
H01M 10/052; H01M 10/0565; H01M 10/0585;
H01M 50/417; H01M 50/431; H01M 50/446;
H01M 50/451; Y02E 60/10

(86) International application number:
PCT/KR2025/007942

(87) International publication number:
WO 2025/258981 (18.12.2025 Gazette 2025/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 13.06.2024   KR 20240077201
              10.06.2025   KR 20250075673

(71) Applicant: LG Chem, Ltd.
Seoul 07336 (KR)

(72) Inventors:
• LEE, Seongsoo
  Daejeon 34122 (KR)
• KIM, Su Jun
  Daejeon 34122 (KR)
• JIN, Sun Mi
  Daejeon 34122 (KR)

(74) Representative: Hoffmann Eitle
Patent- und Rechtsanwälte PartmbB
Arabellastraße 30
81925 München (DE)

(54) **GEL POLYMER ELECTROLYTE-SEPARATOR COMPOSITE AND ELECTROCHEMICAL DEVICE COMPRISING SAME**

(57)    The present invention relates to a gel polymer electrolyte - separator composite for an electrochemical device and an electrochemical device comprising the same. According to the present invention, there are provided a gel polymer electrolyte - separator composite for an electrochemical device and an electrochemical device comprising the same, which are capable of preventing the occurrence of internal short-circuiting caused by the growth of lithium dendrites.

【FIG. 1】

EP 4 738 514 A1

**Description**

**[TECHNICAL FIELD]**

CROSS-REFERENCE TO RELATED APPLICATION(S)

This application claims the benefit of priority based on Korean Patent Application No. 10-2024-0077201 filed on June 13, 2024, and Korean Patent Application No. 10-2025-0075673 filed on June 10, 2025, and all contents disclosed in the documents of said Korean patent applications are incorporated as part of this specification.

The present invention relates to a gel polymer electrolyte - separator composite and an electrochemical device comprising the same.

**[BACKGROUND OF ART]**

With the increasing functionality of mobile phones, notebook computers, tablet computers, mobile batteries, electric vehicles, personal mobility devices, and the like, the demand for electrochemical devices used as their driving power sources has been steadily increasing. In particular, lithium secondary batteries, which have a high operating voltage and high energy density per unit weight, are most widely used.

A lithium secondary battery can generally be manufactured using a cathode and an anode comprising an electrode active material capable of inserting and extracting lithium ions, and an electrolyte that is a medium for transferring lithium ions.

Conventionally, as the electrolyte, a liquid electrolyte, particularly an ion-conductive organic liquid electrolyte prepared by dissolving a salt in a non-aqueous organic solvent, has been mainly used. However, such a liquid electrolyte has a risk of leakage during operation, and the high flammability of the non-aqueous organic solvent used causes problems such as ignition and explosion. Moreover, the liquid electrolyte may decompose during the charge and discharge of a lithium secondary battery, or may cause side reactions with the electrodes to generate gas inside the battery. This phenomenon is further accelerated during high-temperature storage, so the amount of gas generated can increase. The continuously generated gas not only causes an increase in the internal pressure of the battery, leading to deformation of the battery such as swelling, but also causes local imbalance in adhesion on the electrode surfaces within the battery, leading to a problem where the electrode reaction does not occur uniformly over the entire electrode surface.

To overcome these stability problems of the liquid electrolyte, a method of using a gel polymer electrolyte, which has a low risk of leakage, has been proposed. However, since the gel polymer electrolyte also contains a non-aqueous organic solvent, problems regarding the thermal stability of the electrochemical device are still being discussed.

Meanwhile, in the case of an electrochemical device applying lithium metal as an anode, non-uniform lithium deposition occurs during repeated charge and discharge processes, and due to this, lithium dendrites grow on the surface of the lithium metal. However, abnormally grown lithium dendrites can penetrate the separator and cause an internal short-circuit with the cathode, leading to ignition and explosion.

**[DETAILED DESCRIPTION OF THE INVENTION]**

**[Technical Problem]**

The present invention is intended to provide a gel polymer electrolyte - separator composite for an electrochemical device that can prevent the occurrence of an internal short-circuit due to the growth of lithium dendrites.

In addition, the present invention is intended to provide an electrochemical device comprising the gel polymer electrolyte - separator composite for an electrochemical device.

**[Technical Solution]**

According to one embodiment of the invention,
there is provided a gel polymer electrolyte - separator composite for an electrochemical device, comprising:

  a porous polymer substrate,
  a plurality of porous coating layers stacked in sequence on the porous polymer substrate, and
  a gel polymer electrolyte impregnated into the porous polymer substrate and the porous coating layers;
  wherein the plurality of porous coating layers comprise:

    a porous coating layer comprising at least one type of first inorganic fine particles selected from the group consisting of lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), (LiAlTiP)$_xO_y$-based glass ($0<x<4$, $0<y<13$), lithium lanthanum titanate ($Li_xLa_yTiO_3$, $0<x<2$, $0<y<3$), lithium germanium thiophosphate ($Li_xGe_yP_zS_w$, $0<x<4$, $0<y<1$, $0<z<1$, $0<w<5$), and $SiS_2$-based glass ($Li_xSi_yS_z$, $0<x<3$, $0<y<2$, $0<z<4$), and

a porous coating layer comprising at least one type of second inorganic fine particles selected from the group consisting of $SrTiO_3$, $SnO_2$, $CeO_2$, $MgO$, $NiO$, $CaO$, $ZnO$, $ZrO_2$, $Y_2O_3$, $Al_2O_3$, boehmite (AlO(OH)), $Al(OH)_3$, $TiO_2$, $SiC$, and $BaTiO_3$.

According to another embodiment of the invention, there is provided an electrochemical device comprising the gel polymer electrolyte - separator composite.

Hereinafter, a more detailed description will be given of the gel polymer electrolyte - separator composite for an electrochemical device and the electrochemical device comprising the same according to embodiments of the invention.

The terms or words used in this specification and the claims should not be construed as being limited to their ordinary or dictionary meanings, but should be interpreted with meanings and concepts consistent with the technical spirit of the invention, based on the principle that the inventor can appropriately define the concept of the terms to explain his or her invention in the best way.

Unless otherwise defined herein, all technical and scientific terms have the same meaning as commonly understood by one of ordinary skill in the art to which this invention belongs. The terms used in the description of the present invention are for the purpose of effectively describing particular embodiments only and are not intended to limit the present invention.

The singular forms used herein include the plural forms as well, unless the context clearly indicates otherwise.

The meaning of "comprising" as used herein specifies the presence of stated features, regions, integers, steps, operations, elements, and/or components, but does not preclude the presence or addition of one or more other features, regions, integers, steps, operations, elements, components, and/or groups thereof.

As the present invention is capable of various modifications and of having various forms, particular embodiments will be illustrated and described in detail below. However, this is not intended to limit the present invention to the specific disclosed forms, and it should be understood that it includes all modifications, equivalents, and substitutes included in the spirit and scope of the invention.

In this specification, when the positional relationship between two parts is described, for example, as 'on ~', 'above ~', 'below ~', 'next to ~', etc., one or more other parts may be located between the two parts, unless the expression 'directly' or 'immediately' is used.

In this specification, when a temporal sequence is described, for example, as 'after ~', 'following ~', 'subsequent to ~', 'before ~', etc., it may include nonconsecutive cases, unless the expression 'directly' or 'immediately' is used.

In this specification, the term 'at least one' should be understood to include all possible combinations from one or more related items.

Also, the terms including ordinals such as "first" and "second" in this specification are used for distinguishing one component from another component and are not limited by the ordinal numbers. For example, within the scope of the present invention, a first component may also be referred to as a second component, and similarly, a second component may be referred to as a first component.

According to one embodiment of the invention,
there is provided a gel polymer electrolyte - separator composite for an electrochemical device, comprising:

a porous polymer substrate,
a plurality of porous coating layers stacked in sequence on the porous polymer substrate, and
a gel polymer electrolyte impregnated into the porous polymer substrate and the porous coating layers;
wherein the plurality of porous coating layers comprise:

a porous coating layer comprising at least one type of first inorganic fine particles selected from the group consisting of lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), (LiAlTiP)$_xO_y$-based glass ($0<x<4$, $0<y<13$), lithium lanthanum titanate ($Li_xLa_yTiO_3$, $0<x<2$, $0<y<3$), lithium germanium thiophosphate ($Li_xGe_yP_zS_w$, $0<x<4$, $0<y<1$, $0<z<1$, $0<w<5$), and $SiS_2$-based glass ($Li_xSi_yS_z$, $0<x<3$, $0<y<2$, $0<z<4$), and
a porous coating layer comprising at least one type of second inorganic fine particles selected from the group consisting of $SrTiO_3$, $SnO_2$, $CeO_2$, $MgO$, $NiO$, $CaO$, $ZnO$, $ZrO_2$, $Y_2O_3$, $Al_2O_3$, boehmite (AlO(OH)), $Al(OH)_3$, $TiO_2$, $SiC$, and $BaTiO_3$.

As a result of the inventors' continued research, it has been confirmed that a gel polymer electrolyte - separator composite comprising a plurality of porous coating layers satisfying the above configuration can prevent the occurrence of internal short-circuiting caused by the growth of lithium dendrites on a lithium metal electrode. The first inorganic fine particles included in the plurality of porous coating layers are capable of electrochemically suppressing the growth of the lithium dendrites. Furthermore, the second inorganic fine particles included in the plurality of porous coating layers provide excellent density and durability, thereby preventing the lithium dendrites from physically penetrating the gel polymer electrolyte - separator composite. The gel polymer electrolyte - separator composite for an electrochemical device enables the provision of a highly safe electrochemical device through the complementary properties exhibited by the plurality of porous coating layers.

The gel polymer electrolyte - separator composite for an electrochemical device according to the above embodiment comprises a porous polymer substrate, a plurality of porous coating layers stacked in sequence on the porous polymer substrate, and a gel polymer electrolyte impregnated into the porous polymer substrate and the porous coating layers.

In the gel polymer electrolyte - separator composite for an electrochemical device, the porous polymer substrate has high porosity that allows lithium-ion migration between the cathode and the anode, and may be applied without particular limitation as long as it does not induce chemical changes in the electrochemical device.

According to one embodiment, the porous polymer substrate may include at least one polymer selected from the group consisting of polyethylene, polypropylene, polyethylene terephthalate, polypropylene terephthalate, polybutylene terephthalate, polyester, polyacetal, polyamide, polycarbonate, polyimide, polyamide-imide, polyetherimide, polyetheretherketone, polyethersulfone, polyphenylene oxide, polyphenylene sulfide, and polyethylene naphthalate.

According to one embodiment, the porous polymer substrate may have a thickness in a range of 5 $\mu$m to 100 $\mu$m. To ensure the mechanical properties required for the substrate, it is preferable that the porous polymer substrate has a thickness of at least 5 $\mu$m. However, if the substrate is excessively thick, ion conductivity may decrease, which can lead to a reduction in the performance of the electrochemical device. Therefore, it is preferable that the thickness of the porous polymer substrate does not exceed 100 $\mu$m.

According to one embodiment, the porous polymer substrate preferably has a tensile strength of 300 kgf/cm$^2$ to 1000 kgf/cm$^2$ in both the machine direction (MD) and the transverse direction (TD). To prevent defects from occurring in the porous polymer substrate during the manufacturing and operation of the electrochemical device, it is preferable that the substrate satisfies this tensile strength range.

According to one embodiment, the porous polymer substrate may have a pore size in a range of 10 nm to 1000 nm and a porosity of 10% to 90%. When the porous polymer substrate has a pore size and porosity within this range, it can provide the required separation function and mechanical strength of the separator without acting as a resistance to ion conduction.

The pore size and porosity of the porous polymer substrate may be measured using instruments such as a scanning electron microscope (SEM) or a capillary flow porometer (CFP). Alternatively, the porosity of the porous polymer substrate may be calculated as a percentage (%) using the following equation: the actual density of the porous polymer substrate (i.e., the weight per unit area divided by the thickness, denoted as W) is divided by the theoretical density of the porous polymer substrate (denoted as Z), the resulting ratio is subtracted from 1, and then multiplied by 100.

$$\text{Porosity of the porous polymer substrate (\%)} = [1 - (W/Z)] \times 100$$

In the gel polymer electrolyte - separator composite for an electrochemical device, a plurality of porous coating layers are stacked in sequence on the porous polymer substrate.

The plurality of porous coating layers includes two or more porous coating layers.

In one example, the plurality of porous coating layers include a first porous coating layer comprising the first inorganic fine particles, which can electrochemically suppress the growth of lithium dendrites on a lithium metal electrode. The first porous coating layer is formed on the porous polymer substrate. Further, the plurality of porous coating layers include a second porous coating layer comprising the second inorganic fine particles, which can prevent the lithium dendrites from physically penetrating the gel polymer electrolyte - separator composite. The second porous coating layer is formed on the first porous coating layer.

Preferably, the gel polymer electrolyte - separator composite for an electrochemical device may include the porous polymer substrate, a first porous coating layer stacked on the porous polymer substrate and comprising the first inorganic fine particles, a second porous coating layer stacked on the first porous coating layer and comprising the second inorganic fine particles, and a gel polymer electrolyte impregnated into the porous polymer substrate and the porous coating layers.

The gel polymer electrolyte - separator composite for an electrochemical device has a structure in which the layers are stacked in sequence on the porous polymer substrate. The first porous coating layer comprises first inorganic fine particles capable of electrochemically suppressing the growth of lithium dendrites, while the second porous coating layer comprises second inorganic fine particles in the form of acicular particles with a high aspect ratio, which serve to block the physical penetration of lithium dendrites. By functioning complementarily, these two coating layers can effectively prevent dendrite growth and electrode short-circuiting at the lithium metal anode. This layered structure significantly enhances the safety and reliability of the electrochemical device, and ensures high stability even during long-term operation in high-energy-density environments of lithium metal secondary batteries.

According to one embodiment, the first inorganic fine particles may be inorganic particles comprising at least one compound selected from the group consisting of lithium titanium phosphate ($Li_xTi_y(PO_4)_3$, 0<x<2, 0<y<3), lithium aluminum titanium phosphate ($Li_xAl_yTi_z(PO_4)_3$, 0<x<2, 0<y<1, 0<z<3), (LiAlTiP)$_x$O$_y$-based glass (0<x<4, 0<y<13), lithium lanthanum titanate ($Li_xLa_yTiO_3$, 0<x<2, 0<y<3), lithium germanium thiophosphate ($Li_xGe_yP_zS_w$, 0<x<4, 0<y<1, 0<z<1, 0<w<5), and SiS$_2$-based glass ($Li_xSi_yS_z$, 0<x<3, 0<y<2, 0<z<4).

The second inorganic fine particles may be inorganic particles comprising at least one compound selected from the group consisting of $SrTiO_3$, $SnO_2$, $CeO_2$, $MgO$, $NiO$, $CaO$, $ZnO$, $ZrO_2$, $Y_2O_3$, $Al_2O_3$, boehmite ($AlO(OH)$), $Al(OH)_3$, $TiO_2$, SiC, and $BaTiO_3$.

According to one embodiment, the first and second inorganic fine particles may each independently have a particle shape selected from the group consisting of acicular particles, angular particles, dendritic particles, fibrous particles, flaky particles, granular particles, irregular particles, nodular particles, and spheroidal particles.

Preferably, the first inorganic fine particles may be angular particles, granular particles, or spheroidal particles.

Preferably, the second inorganic fine particles may be acicular particles having an aspect ratio in a range of 5 to 10. The aspect ratio refers to the ratio of the length of the particle to its diameter. In order to impart excellent density and durability to the second porous coating layer, it is preferable that the second inorganic fine particles be acicular particles having an aspect ratio of 5.0 or greater, or 5.1 or greater, or 5.2 or greater. However, if the aspect ratio is too large, the porosity of the second porous coating layer may become too low, resulting in increased resistance. Therefore, it is preferable that the second inorganic fine particles be acicular particles having an aspect ratio of 10.0 or less, or 9.5 or less, or 8.0 or less, or 7.5 or less, or 7.0 or less, or 6.5 or less, or 6.0 or less, or 5.5 or less. Specifically, the second inorganic fine particles may be acicular particles having an aspect ratio in the ranges of 5.0 to 10.0, or 5.1 to 10.0, or 5.1 to 9.5, or 5.1 to 9.0, or 5.1 to 8.5, or 5.1 to 8.0, or 5.2 to 8.0, or 5.2 to 7.5, or 5.2 to 7.0, or 5.2 to 6.5, or 5.2 to 6.0, or 5.2 to 5.5.

Since acicular particles have a relatively high aspect ratio, the contact area between the particles within the porous coating layer increases, enabling the formation of a more densely packed particle structure. Accordingly, the mechanical strength and structural stability of the second porous coating layer are improved, and the layer can more effectively serve as a barrier to physically block the penetration of lithium dendrites. In particular, due to the directional nature of acicular particles, if the particles are aligned parallel during the coating process, they can further deflect or divert the path of dendrite growth within the layered structure, thereby enhancing the safety of the electrochemical device. In addition, the high surface-to-volume ratio of acicular particles enhances bonding with the polymer binder, which is advantageous for improving the thermal resistance and durability of the coating layer.

According to one embodiment, the first and second inorganic fine particles each independently have a cumulative 50% particle diameter (D50) of 20 nm to 500 nm as measured by laser diffraction scattering particle size distribution analysis.

The laser diffraction scattering particle size distribution measurement is a method in which the inorganic fine particles are dispersed in a dispersion medium, and a laser beam is irradiated onto the dispersion, with the resulting scattered light (forward-scattered light) being collected to obtain the diffraction pattern from which the particle size distribution is determined. This method allows relatively simple, rapid, and highly precise measurement of the particle size distribution. Here, the cumulative 50% particle diameter (D50) refers to the particle diameter, measured using a laser diffraction scattering particle size distribution apparatus, at which 50% of the mass of the particles, starting from the smaller size, is accumulated.

To ensure that the inorganic fine particles are uniformly dispersed during the formation of the porous coating layers, the D50 value is preferably 20 nm or more, 50 nm or more, 100 nm or more, or 150 nm or more. However, if the particle size of the inorganic fine particles is too large, it becomes difficult to coat the porous coating layers uniformly, and damage to the porous polymer substrate or electrodes may occur during the rolling process after drying. Therefore, the D50 value is preferably 500 nm or less, 450 nm or less, 400 nm or less, or 350 nm or less.

Specifically, the D50 value may be 20 nm to 500 nm, or 50 nm to 500 nm, or 50 nm to 450 nm, or 100 nm to 450 nm, or 100 nm to 400 nm, or 150 nm to 400 nm, or 150 nm to 350 nm.

More specifically, the first inorganic fine particles preferably have a D50 value of 20 nm to 500 nm, or 100 nm to 450 nm, or 150 nm to 350 nm, or 200 nm to 350 nm, or 250 nm to 350 nm, which is advantageous for forming the porous coating layer and electrochemically suppressing the growth of lithium dendrites. In addition, the second inorganic fine particles are preferably acicular particles having a D50 value of 20 nm to 500 nm, or 50 nm to 400 nm, or 100 nm to 300 nm, or 150 nm to 200 nm, which is advantageous for forming the porous coating layer and physically preventing the penetration of lithium dendrites.

The plurality of porous coating layers each include a polymer binder and inorganic fine particles dispersed in the polymer binder.

In one example, in the porous coating layer, the inorganic fine particles are interconnected and fixed by the polymer binder, and a porous structure may be formed due to the interstitial volume between the inorganic fine particles.

The polymer binder may gel upon impregnation with the gel polymer electrolyte, thereby exhibiting a high degree of swelling. Preferably, the polymer binder is at least one compound selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, and polyvinyl acetate.

The polymer binder may further include at least one compound selected from the group consisting of polyimide, polyetherimide, ethylene-vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene-butadiene rubber, and fluorinated rubber, in addition to the compounds exemplified above.

In one embodiment, each of the plurality of porous coating layers may include 1 to 90 wt% of the polymer binder and 10 to 99 wt% of the inorganic fine particles. To ensure that the porous coating layers possess appropriate porosity and insulation properties, it is preferable that the inorganic fine particles are included in an amount of at least 10 wt%. However, if the inorganic fine particles are included in an excessive amount, the mechanical properties of the porous coating layers may be degraded due to reduced adhesion. Therefore, it is preferable that the inorganic fine particles are included in an amount of 99 wt% or less.

In one embodiment, the thickness of each of the porous coating layers is preferably adjusted within a range of 2 $\mu$m to 100 $\mu$m, or 2 $\mu$m to 80 $\mu$m, or 2 $\mu$m to 50 $\mu$m, or 2 $\mu$m to 20 $\mu$m to achieve appropriate performance.

The gel polymer electrolyte - separator composite for an electrochemical device comprises the gel polymer electrolyte impregnated into the porous polymer substrate and the porous coating layers.

The gel polymer electrolyte includes a lithium salt, a matrix gel polymer, and a non-aqueous organic solvent.

The lithium salt serves as a source of lithium ions within the electrochemical device, enabling the basic operation of the device and facilitating the migration of lithium ions between the electrodes.

Specifically, the lithium salt may include one or more compounds selected from the group consisting of $LiBF_4$, $LiPF_6$, $LiSbF_6$, $LiAsF_6$, $LiOH$, $LiOH \cdot H_2O$, $LiBOB$, $LiAlO_4$, $LiAlCl_4$, $LiCF_3SO_3$, $LiC_4F_9SO_3$, $LiN(C_2F_5SO_2)_2$, $LiN(CF_3SO_2)_2$, $LiC(CF_3SO_2)_3$, $LiC_4BO_8$, $LiTFSI$, $LiFSI$, $LiCl$, $Lil$, $LiB(C_2O_4)_2$, and $LiClO_4$.

The lithium salt may be included in an amount of 10 to 50 parts by weight based on 100 parts by weight of the total composition of the composition for forming the gel polymer electrolyte. To ensure an appropriate level of ionic conductivity in the gel polymer electrolyte, the lithium salt is preferably included in an amount of 10 parts by weight or more, 12 parts by weight or more, or 15 parts by weight or more, based on 100 parts by weight of the total composition. However, if an excessive amount of lithium salt is applied, undissociated lithium salt remaining in a crystalline state may reduce ionic conductivity and decrease the mechanical strength of the gel polymer electrolyte. Therefore, the lithium salt is preferably included in an amount of 50 parts by weight or less, 47 parts by weight or less, or 45 parts by weight or less, based on 100 parts by weight of the total composition. Specifically, the lithium salt may be included in an amount of 10 to 50 parts by weight, 12 to 50 parts by weight, 12 to 47 parts by weight, 15 to 47 parts by weight, or 15 to 45 parts by weight, based on 100 parts by weight of the total composition.

The matrix gel polymer may be formed into a three-dimensional gel network structure by polymerization among multifunctional acrylate-based compounds.

In one example, the multifunctional acrylate-based compound may include one or more selected from the group consisting of tetraethylene glycol diacrylate, trimethylolpropane ethoxylate triacrylate, trimethylolpropane propoxylate triacrylate, polyethylene glycol diacrylate, polyethylene glycol dimethacrylate, polyester dimethacrylate, trimethylolpropane trimethacrylate, ethoxylated bisphenol A dimethacrylate, 1,4-butanediol diacrylate, 1,6-hexanediol diacrylate, ditrimethylolpropane tetraacrylate, pentaerythritol tetraacrylate, pentaerythritol ethoxylate tetraacrylate, dipentaerythritol pentaacrylate, and dipentaerythritol hexaacrylate.

The multifunctional acrylate-based compounds may be included in an amount of 0.5 to 20 parts by weight, based on the total 100 parts by weight of the composition for forming the gel polymer electrolyte. To minimize the content of free liquid and to ensure that the gel matrix is properly formed, the multifunctional acrylate-based compounds are preferably included in an amount of 0.5 parts by weight or more, or 1 part by weight or more, or 2 parts by weight or more, based on the total 100 parts by weight of the composition. However, if the multifunctional acrylate-based compounds are included in an excessive amount, the ion transport capability of the gel polymer electrolyte may be reduced. Therefore, the multifunctional acrylate-based compounds are preferably included in an amount of 20 parts by weight or less, or 17 parts by weight or less, or 15 parts by weight or less, based on the total 100 parts by weight of the composition. Specifically, the multifunctional acrylate-based compounds may be included in an amount of 0.5 to 20 parts by weight, or 1 to 20 parts by weight, or 1 to 17 parts by weight, or 2 to 17 parts by weight, or 2 to 15 parts by weight, based on the total 100 parts by weight of the composition.

The composition for forming the gel polymer electrolyte may further include a polymerization initiator for inducing the polymerization reaction of the multifunctional acrylate-based compounds.

The polymerization initiator may be any compound known in the art to be suitable for initiating the polymerization reaction of the multifunctional acrylate-based compounds without particular limitation. Preferably, the polymerization initiator may be selected from the group consisting of acetyl peroxide, benzoyl peroxide, dilauroyl peroxide, di-tert-butyl peroxide, t-butyl peroxy-2-ethylhexanoate, cumyl hydroperoxide, hydrogen peroxide, 2,2'-azobis(cyanobutane), 2,2'-azobis(methylbutyronitrile), azobis-isobutyronitrile, and azobis-dimethylvaleronitrile, or a combination of one or more thereof.

The polymerization initiator may be included in an amount of 0.01 to 5 parts by weight, based on the total 100 parts by weight of the composition. To ensure an appropriate polymerization reaction, the polymerization initiator is preferably included in an amount of 0.01 parts by weight or more, or 0.05 parts by weight or more, or 0.1 parts by weight or more, based on the total 100 parts by weight of the composition. However, if an excessive amount of the polymerization initiator is used, the residual initiator after the polymerization reaction may deteriorate the properties of the gel polymer electrolyte. Therefore, the polymerization initiator is preferably included in an amount of 5 parts by weight or less, or 4.5 parts by weight or less, or 4 parts by weight or less, based on the total 100 parts by weight of the composition. Specifically, the polymerization initiator may be included in an amount of 0.01 to 5 parts by weight, or 0.05 to 5 parts by weight, or 0.05 to 4.5 parts by weight, or 0.1 to 4.5 parts by weight, or 0.1 to 4 parts by weight, based on the total 100 parts by weight of the composition.

The non-aqueous organic solvent included in the gel polymer electrolyte may be any compound known in the art to be suitable for a gel polymer electrolyte without particular limitation. Specifically, the non-aqueous organic solvent may include one or more selected from the group consisting of ester solvents such as methyl acetate, ethyl acetate, $\gamma$-butyrolactone, and $\varepsilon$-caprolactone; ether solvents such as dibutyl ether and tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol solvents such as ethanol and isopropyl alcohol; nitriles of the form R-CN (where R is a C2-C20 linear, branched, or cyclic hydrocarbon group, which may include double bonds, ring structures, or ether linkages); amides such as dimethylformamide; dioxolanes such as 1,3-dioxolane; and sulfolane.

Preferably, the non-aqueous organic solvent may include one or more selected from the group consisting of methyl acetate, ethyl acetate, $\gamma$-butyrolactone, $\varepsilon$-caprolactone, dibutyl ether, tetrahydrofuran, cyclohexanone, benzene, fluorobenzene, dimethyl carbonate, diethyl carbonate, dipropyl carbonate, methylpropyl carbonate, ethylpropyl carbonate, ethyl methyl carbonate, ethylene carbonate, propylene carbonate, butylene carbonate, ethanol, isopropyl alcohol, dimethylformamide, 1,3-dioxolane, dimethyl sulfone, sulfolane, and triethylene glycol dimethyl ether.

The non-aqueous organic solvent may be included in an amount of 15 to 85 parts by weight, based on the total 100 parts by weight of the composition for forming the gel polymer electrolyte. To ensure uniform mixing of the composition, the non-aqueous organic solvent is preferably included in an amount of 15 parts by weight or more, or 17 parts by weight or more, or 20 parts by weight or more, based on the total 100 parts by weight of the composition. However, if an excessive amount of the non-aqueous organic solvent is used, formation of the gel matrix may be hindered, and the mechanical strength of the gel polymer electrolyte may be reduced. Therefore, the non-aqueous organic solvent is preferably included in an amount of 85 parts by weight or less, or 80 parts by weight or less, or 75 parts by weight or less, based on the total 100 parts by weight of the composition. Specifically, the non-aqueous organic solvent may be included in an amount of 15 to 85 parts by weight, or 17 to 85 parts by weight, or 17 to 80 parts by weight, or 20 to 80 parts by weight, or 20 to 75 parts by weight, based on the total 100 parts by weight of the composition.

In one embodiment, the lithium salt may be included at a concentration of 0.5 M to 2.5 M, or 0.5 M to 2.0 M, or 0.5 M to 1.5 M with respect to the non-aqueous organic solvent. The lithium salt may be added in an appropriate amount in consideration of its relative proportion to the content of the non-aqueous organic solvent, which can ionize the lithium salt, and to ensure a normal supply of lithium ions necessary for operation of the electrochemical device. To secure an adequate level of ionic conductivity in the gel polymer electrolyte, the lithium salt is preferably included at a concentration of 0.5 M or higher with respect to the non-aqueous organic solvent. However, if an excessive amount of the lithium salt is used, lithium salt remaining in an undissociated or crystalline state may reduce ionic conductivity and lower the mechanical strength of the gel polymer electrolyte. Therefore, the lithium salt is preferably included at a concentration of 2.5 M or lower, or 2.0 M or lower, or 1.5 M or lower with respect to the non-aqueous organic solvent.

The composition for forming the gel polymer electrolyte may be prepared by dissolving the lithium salt in the non-aqueous organic solvent and then adding the multifunctional acrylate-based compound thereto.

The composition for forming the gel polymer electrolyte may be incorporated into an electrochemical device in a state impregnated onto the porous polymer substrate and the plurality of porous coating layers. Applying appropriate heat to this composition initiates polymerization to form the gel polymer electrolyte.

Meanwhile, the gel polymer electrolyte - separator composite for an electrochemical device may be provided via a method comprising: applying a slurry including the polymer binder, the first inorganic fine particles, and a solvent onto the porous polymer substrate to form a first porous coating layer; applying a slurry including the polymer binder, the second inorganic fine particles, and a solvent onto the first porous coating layer to form a second porous coating layer; and impregnating the porous polymer substrate and the first and second porous coating layers with the gel polymer electrolyte.

Alternatively, the gel polymer electrolyte-separator composite for an electrochemical device may be provided via a method comprising: applying a slurry including the polymer binder, the first inorganic fine particles, the second inorganic fine particles, and a solvent onto the porous polymer substrate to form a first porous coating layer including the first inorganic fine particles and a second porous coating layer including the second inorganic fine particles; and impregnating the porous polymer substrate and the first and second porous coating layers with the gel polymer electrolyte. In a manufacturing method in which the first and second inorganic fine particles are mixed and coated together, phase separation occurs due to differences in particle shape and particle size range between the first and second inorganic fine particles, thereby forming the first and second porous coating layers. Due to this phase separation, the first porous coating layer is predominantly occupied by the first inorganic fine particles, whereas the second porous coating layer is predominantly occupied by the second inorganic fine particles.

In the manufacturing method according to the second method, when a mixed slurry comprising the first inorganic fine particles and the second inorganic fine particles is applied in a single coating process, the first porous coating layer and the second porous coating layer may be formed simultaneously by utilizing the natural phase separation phenomenon based on the difference in the physical properties of the particles (e.g., particle shape, particle size, density, surface energy, etc.). In order to stably implement such a phase separation-based structure formation, the coating and drying process conditions of the mixed slurry must be precisely controlled.

For example, the temperature of the slurry during coating acts as an important factor in maintaining the dispersion stability of the particles and the slurry viscosity. At too low a temperature, agglomeration between particles is promoted due to an increase in viscosity, and at too high a temperature, particle fixation may occur before phase separation due to rapid volatilization of the solvent. Therefore, it is preferable for the temperature of the slurry during coating to be controlled in a range of 15 °C to 50 °C or 20 °C to 40 °C, and through this, the interaction and dispersion state between particles may be appropriately maintained.

As another example, the drying process conditions after coating are a major factor in determining the phase separation effect utilizing the difference in gravity and viscosity of the inorganic fine particles. In particular, the drying temperature and time should provide sufficient time for the particles in the slurry to gradually move their positions, while also preventing interlayer mixing due to excessively rapid solvent evaporation. Preferably, the drying process after coating is performed at a temperature of 50 °C to 90 °C or 60 °C to 85 °C for 1 minute to 30 minutes or 5 minutes to 25 minutes, thereby inducing the first inorganic fine particles to be preferentially localized in the lower part and the second inorganic fine particles in the upper part. The drying time may be adjusted according to the thickness of the coating layer, the viscosity of the slurry, and the volatilization characteristics of the solvent used.

In addition, the wind speed applied during the drying process is also a factor affecting the positional movement of the particles. If the wind speed is too fast, rapid drying of the solvent is induced, reducing particle mobility and hindering phase separation, and conversely, if the wind speed is too low, a non-uniform pore structure may be formed in the coating layer due to excessive solvent residue. Therefore, it is preferable to proceed with drying under a constant wind speed condition of 0.3 m/s to 5.0 m/s or 0.5 m/s to 4.5 m/s depending on the components of the slurry and the characteristics of the coating equipment. It is advantageous to set the wind speed to act parallel to the coating surface to promote the vertical localization of the inorganic fine particles.

Through such process conditions, by controlling the natural density gradient and gravitational sedimentation phenomenon based on the particle size and shape inside the slurry, a dual porous coating layer in which the first and second inorganic fine particles are each predominantly distributed may be formed without a separate multi-layer coating process. This not only improves process efficiency, but also mitigates the process sensitivity for controlling the shape of the multi-layer structure, which can improve stability and reproducibility when applied to a large area.

As the solvent included in the slurry, a solvent exhibiting a solubility of 1 wt% or more, or 2.5 wt% or more, or 5 wt% or more, or 7.5 wt% or more, or 10 wt% or more with respect to the polymer binder at room temperature (25°C) may be preferably used.

Preferably, the solvent may be at least one selected from the group consisting of methyl acetate, ethyl acetate, γ-butyrolactone, ε-caprolactone, dibutyl ether, tetrahydrofuran, cyclohexanone, benzene, fluorobenzene, N-methyl-2-pyrrolidone, dimethyl carbonate, diethyl carbonate, methyl ethyl carbonate, ethyl methyl carbonate, ethylene carbonate, propylene carbonate, dimethylformamide, 1,3-dioxolane, and sulfolane.

It is preferable for the slurry to have a solid content of 40 wt% to 80 wt%. If the solid content of the slurry is too high, it may cause an increase in viscosity, preventing the slurry from penetrating into the pore regions of the porous polymer substrate, and as a result, the interfacial adhesion between the porous polymer substrate and the porous coating layer may deteriorate. However, if the solid content of the slurry is too low, pin-holes may occur during the coating of the slurry, and the drying efficiency of the slurry coating may deteriorate. Specifically, the solid content of the slurry may be 40 wt% or more; and 80 wt% or less, or 70 wt% or less, or 60 wt% or less. Preferably, the solid content of the slurry may be 40 wt% to 80 wt%, or 40 wt% to 70 wt%, or 40 wt% to 60 wt%.

As a method for applying the slurry onto the porous polymer substrate, a conventional coating method known in the technical field to which the present invention belongs may be applied. For example, for the coating of the slurry, spin coating, dip coating, die coating, roll coating, comma coating, gravure coating, bar coating, curtain coating, screen printing, inkjet printing, doctor blade, or a combination thereof may be used. The thickness of the coating layer formed on the porous polymer substrate during the coating of the slurry may be adjusted in consideration of the composition of the slurry and the thickness of the porous coating layer to be finally formed.

The step of forming the porous coating layer may be performed by vaporizing the solvent from the slurry coated on the porous polymer substrate. Preferably, the step of forming the porous coating layer may be performed at a temperature of 80-120 °C or 80-110 °C. If the temperature range is not met, the drying efficiency may decrease or a change in the shape of the porous polymer substrate or the porous coating layer may occur, causing defects.

The porous coating layer formed by the above method may comprise 1 to 90 wt% of the polymer binder and 10 to 99 wt% of the inorganic fine particles. In order to impart appropriate porosity and insulation properties to the porous layer, it is preferable for the inorganic fine particles to be included in an amount of 10 wt% or more. However, if the inorganic fine particles are included in an excessive amount, the mechanical properties of the porous coating layer may deteriorate due to weakened adhesive strength. Therefore, it is preferable for the inorganic fine particles to be included in an amount of 99 wt% or less.

Meanwhile, according to another embodiment of the invention, an electrochemical device comprising the above-described gel polymer electrolyte - separator composite is provided.

As the above-described gel polymer electrolyte - separator composite is applied to the electrochemical device, the occurrence of an internal short-circuit due to the growth of lithium dendrites may be prevented.

According to one embodiment, the electrochemical device comprises a cathode, an anode, and the gel polymer electrolyte - separator composite interposed between the cathode and the anode.

The electrochemical device includes any device that undergoes an electrochemical reaction. For example, the electrochemical device may be a primary battery, a secondary battery, a fuel cell, a solar cell, a capacitor, and the like. The secondary battery may be a lithium secondary battery. The lithium secondary battery may be a lithium metal secondary battery, a lithium ion secondary battery, a lithium polymer secondary battery, a lithium ion polymer secondary battery, and the like.

The electrochemical device may be manufactured according to a conventional method in the technical field to which the present invention belongs. As a non-limiting example, the electrochemical device may be manufactured by including (i) a step of inserting an electrode assembly, formed by winding a cathode, an anode, and a separator interposed between the cathode and the anode, into an electrochemical device case; and (ii) a step of forming a gel polymer electrolyte by injecting the above-described composition for forming a gel polymer electrolyte into the case and then polymerizing it. Here, the separator is one comprising the porous polymer substrate and the plurality of porous coating layers stacked in sequence on the porous polymer substrate.

The two electrodes included in the electrochemical device each comprise an electrode current collector layer and an electrode active material layer stacked on the electrode current collector layer.

For the electrode current collector layer, an electrode current collector known in the technical field to which the present invention belongs to have conductivity without causing chemical changes in the electrochemical device may be applied. For example, as the electrode current collector, stainless steel; aluminum; nickel; titanium; calcined carbon; or one whose surface is treated with carbon, nickel, titanium, silver, etc., on an aluminum or stainless steel surface may be used.

Preferably, the electrode current collector may have a thickness of 3 $\mu$m to 500 $\mu$m. In order to increase the adhesive strength with the electrode material, the electrode current collector may have fine irregularities formed on its surface. The electrode current collector may have various forms such as a film, a sheet, a foil, a net, a porous body, a foam, a non-woven fabric, and the like.

The electrode active material layer may comprise an electrode material composition that is a mixture of an electrode active material, a conductive agent, and a binder.

The conductive agent may be used to impart electron conductivity to the electrode. As the conductive agent, any one that has electron conductivity without causing chemical changes in the electrochemical device may be used without particular limitation. As a non-limiting example, the conductive agent may be a carbon-based material such as carbon black, acetylene black, Ketjen black, channel black, furnace black, lamp black, thermal black, carbon fiber; graphite such as natural graphite or artificial graphite; a metal powder or metal fiber such as copper, nickel, aluminum, silver; a conductive whisker such as zinc oxide, potassium titanate; a conductive metal oxide such as titanium oxide; or a conductive polymer such as a polyphenylene derivative. As the conductive agent, one or a mixture of two or more of the above-described examples may be used.

The content of the conductive agent may be adjusted within a range that expresses an appropriate level of conductivity without causing a decrease in the capacity of the electrochemical device. Preferably, the content of the conductive agent may be 1 wt% to 10 wt% or 1 wt% to 5 wt% with respect to the total weight of the electrode material composition.

The binder is used to properly attach the electrode material composition to the electrode current collector. As a non-limiting example, the binder may be polyvinyl alcohol, polyacrylate, carboxymethylcellulose, hydroxypropylcellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon resin, etc. As the binder, one or a mixture of two or more of the above-described examples may be used.

The content of the binder may be adjusted within a range that expresses an appropriate level of adhesion without causing a decrease in the capacity of the electrochemical device. Preferably, the content of the binder may be 1 wt% to 10 wt% or 1 wt% to 5 wt% with respect to the total weight of the electrode material composition.

When the electrode is a cathode, as the cathode active material, any material capable of reversible insertion and extraction of lithium ions may be used without particular limitation. For example, the cathode active material may be a composite oxide or phosphate comprising lithium and a metal of cobalt, manganese, nickel, iron, or a combination thereof.

As another example, the cathode active material may be a compound represented by any one of the following chemical formulas: $Li_aA_{1-b}R_bD_2$ ($0.90 \leq a \leq 1.8$, $0 \leq b \leq 0.5$); $Li_aE_{1-b}R_bO_{2-c}D_c$ ($0.90 \leq a \leq 1.8$, $0 \leq b \leq 0.5$, $0 \leq c \leq 0.05$); $LiE_{2-b}R_bO_{4-c}D_c$ ($0 \leq b \leq 0.5$, $0 \leq c \leq 0.05$); $Li_aNi_{1-b-c}Co_bR_cD_d$ ($0.90 \leq a \leq 1.8$, $0 \leq b \leq 0.5$, $0 \leq c \leq 0.05$, $0 < d < 2$); $Li_aNi_{1-b-c}Co_bR_cO_{2-d}Z_d$ ($0.90 \leq a \leq 1.8$, $0 \leq b \leq 0.5$, $0 \leq c \leq 0.05$, $0 < d < 2$); $Li_aNi_{1-b-c}Co_bR_cO_{2-d}Z_2$ ($0.90 \leq a \leq 1.8$, $0 \leq b \leq 0.5$, $0 \leq c \leq 0.05$, $0 < d < 2$); $Li_aNi_{1-b-c}Mn_bR_cD_d$ ($0.90 \leq a \leq 1.8$, $0 \leq b \leq 0.5$, $0 \leq c \leq 0.05$, $0 < d < 2$); $Li_aNi_{1-b-c}Mn_bR_cO_{2-d}Z_d$ ($0.90 \leq a \leq 1.8$, $0 \leq b \leq 0.5$, $0 \leq c \leq 0.05$, $0 < d < 2$); $Li_aNi_{1-b-c}Mn_bR_cO_{2-d}Z_2$ ($0.90 \leq a \leq 1.8$, $0 \leq b \leq 0.5$, $0 \leq c \leq 0.05, 0 < d < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$.); $Li_aNi_bCo_cMn_dG_eO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMnG_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $QO_2$; $QS_2$; $LiQS_2$; $V_2O_5$; $LiV_2O_5$; $LiTO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the above chemical formulas, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

One having a coating layer on the surface of the cathode active material may also be used, or a mixture of the cathode active material and a cathode active material having a coating layer may be used. As the coating element included in the coating layer, Mg, Al, Co, K, Na, Ca, Si, Ti, V, Sn, Ge, Ga, B, As, Zr, or a mixture thereof may be used.

According to one embodiment, the cathode active material may be included in an amount of 80 wt% to 95 wt% with respect to the total weight of the electrode material composition. Preferably, the content of the cathode active material may be 82 wt% to 95 wt%, or 82 wt% to 93 wt%, or 85 wt% to 93 wt%, or 85 wt% to 90 wt% with respect to the total weight of the electrode material composition.

When the electrode is an anode, as the anode active material, a material capable of reversibly undergoing intercalation and deintercalation of lithium ions, lithium metal, an alloy of lithium metal, a material capable of being doped and undoped with lithium, and a transition metal oxide may be included.

As the material capable of reversibly undergoing intercalation and deintercalation of lithium ions, a carbonaceous material such as crystalline carbon, amorphous carbon, or a mixture thereof may be exemplified. Specifically, the carbonaceous material may be natural graphite, artificial graphite, Kish graphite, pyrolytic carbon, mesophase pitches, mesophase pitch based carbon fiber, meso-carbon microbeads, petroleum or coal tar pitch derived cokes, soft carbon, hard carbon, and the like.

The alloy of lithium metal may be an alloy of lithium with a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of being doped and undoped with lithium may be Si, a Si-C composite, $SiOx$ ($0 < x < 2$), a Si-Q alloy (where Q is an element selected from the group consisting of an alkali metal, an alkaline earth metal, a Group 13 element, a Group 14 element, a Group 15 element, a Group 16 element, a transition metal, a rare earth element, and a combination thereof; provided that Si is excluded), Sn, $SnO_2$, a Sn-R alloy (where R is an element selected from the group consisting of an alkali metal, an alkaline earth metal, a Group 13 element, a Group 14 element, a Group 15 element, a Group 16 element, a transition metal, a rare earth element, and a combination thereof; provided that Sn is excluded), etc. And, as the material capable of being doped and undoped with lithium, a mixture of at least one of the above examples and $SiO_2$ may be used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, etc.

And, the transition metal oxide may be a vanadium oxide, a lithium vanadium oxide, a lithium titanium oxide, etc.

Preferably, the anode active material may comprise at least one compound selected from the group consisting of a carbonaceous material and a silicon compound. Here, the carbonaceous material is at least one material selected from the group consisting of, as exemplified above, natural graphite, artificial graphite, Kish graphite, pyrolytic carbon, mesophase pitch, mesophase pitch-based carbon fiber, carbon microbeads, petroleum or coal-based coke, soft carbon, and hard carbon. And, the silicon compound may be a compound comprising Si as exemplified above, i.e., Si, a Si-C composite, $SiOx$ ($0<x<2$), the Si-Q alloy, a mixture thereof, or a mixture of at least one of these and $SiO_2$.

The anode active material may be included in an amount of 85 wt% to 98 wt% with respect to the total weight of the electrode material composition. Preferably, the content of the anode active material may be 85 wt% to 97 wt%, or 87 wt% to 97 wt%, or 87 wt% to 95 wt%, or 90 wt% to 95 wt% with respect to the total weight of the electrode material composition.

The thickness of the electrode active material layer is preferably adjusted in a range of 5 $\mu$m to 500 $\mu$m, or 5 $\mu$m to 450 $\mu$m, or 10 $\mu$m to 450 $\mu$m for the expression of appropriate performance.

Preferably, the electrochemical device may be a lithium secondary battery comprising lithium metal or an alloy of lithium metal as described above as the anode.

Lithium metal possesses the highest theoretical capacity among all anode materials (3,860 mAh/g) and the lowest electrochemical potential (-3.04 V vs. SHE), making it highly promising as an anode material for next-generation high-energy-density batteries. Owing to these electrochemical characteristics, lithium metal-based secondary batteries are particularly suitable for next-generation applications that demand both high power and long cycle life, such as electric vehicles, high-power storage systems, drones, and aerospace applications.

When an alloy of lithium metal with other metals is used as the anode material, the stability of lithium deposition and stripping may be improved, and both mechanical stability and interfacial stability may be enhanced. For example, such lithium metal alloys may mitigate dendrite formation compared to pure lithium and exhibit superior performance in terms of cycle stability.

However, lithium secondary batteries applying such lithium metal-based anodes are prone to short lifespan and safety problems due to dendrite formation and interfacial instability during repeated charging and discharging. Accordingly, the gel polymer electrolyte - separator composite according to the present invention may be very usefully applied in a battery system where lithium metal or its alloy is used as the anode. The composite can contribute to improving the lifespan and safety of the battery by inhibiting the growth of lithium dendrites and simultaneously blocking them physically.

The electrochemical device may be used as a power source with enhanced performance and safety in portable electronic devices such as mobile phones, laptop computers, tablet computers, mobile batteries, and digital cameras, as well as in transportation applications including electric vehicles, electric motorcycles, and personal mobility devices.

**[ADVANTAGEOUS EFFECTS]**

According to the present invention, a gel polymer electrolyte - separator composite for an electrochemical device is provided, which is capable of preventing the occurrence of internal short-circuiting caused by the growth of lithium dendrites.

**[BRIEF DESCRIPTION OF THE DRAWING]**

FIG. 1 is a scanning electron microscope (SEM) image of the surface of an anode included in a lithium secondary battery according to Example 1.
FIG. 2 is an SEM image of the surface of an anode included in a lithium secondary battery according to Example 2.
FIG. 3 is an SEM image of the surface of an anode included in a lithium secondary battery according to Example 3.
FIG. 4 is an SEM image of the surface of an anode included in a lithium secondary battery according to Example 4.
FIG. 5 is an SEM image of the surface of an anode included in a lithium secondary battery according to Comparative Example 1.
FIG. 6 is an SEM image of the surface of an anode included in a lithium secondary battery according to Comparative Example 2.
FIG. 7 is an SEM image of the surface of an anode included in a lithium secondary battery according to Comparative Example 3.

**[DETAILED DESCRIPTION OF THE EMBODIMENTS]**

The following describes specific embodiments of the invention to illustrate its operation and effects in more detail. These embodiments are presented solely as examples to aid in understanding the invention. The scope of the invention is not intended to be limited in any way by these embodiments, and it will be apparent to those skilled in the art that various modifications and changes may be made within the scope and technical spirit of the present invention.

Example 1

(1) Preparation of Separator

Lithium aluminum titanium phosphate ($Li_xAl_yTi_z(PO_4)_3$, 0<x<2, 0<y<1, 0<z<3; manufacturer Ganfeng Lithium; angular particles; D50=300nm) was prepared as first inorganic fine particles. Boehmite (AlO(OH); manufacturer Boyaun; acicular particles with an aspect ratio of 5.2; D50=155nm) was prepared as second inorganic fine particles. A dispersion liquid was prepared by dispersing 7 g of the first inorganic fine particles and 3 g of the second inorganic fine particles in N-methyl-2-pyrrolidone (NMP). Poly(vinylidene fluoride-co-hexafluoropropylene) was added as a polymer binder to the dispersion liquid and uniformly mixed using a homogenizer, thereby preparing a slurry with a solid content of 40%.
The slurry (temperature of the slurry 25°C) was applied onto a porous polyethylene substrate with a thickness of 9 $\mu$m (manufacturer: Senior) using a dual slot die. A porous coating layer with a thickness of 6 $\mu$m was formed through a drying process of vaporizing the solvent at 80 °C for 20 minutes. In the drying process, air with a wind speed of 2.0 m/s was supplied in a direction parallel to the coating surface.
As a result of analysis, the porous coating layer was formed of a first porous coating layer with a thickness of about 4.5 $\mu$m in which the first inorganic fine particles occupied a dominant volume, and a second porous coating layer with a thickness of about 1.5 $\mu$m in which the second inorganic fine particles occupied a dominant volume. A structure in which the first and second porous coating layers were stacked in sequence on the porous polyethylene substrate was formed. The composition of the first and second porous coating layers consisted of a ratio of 90 wt% of the inorganic fine particles and 10 wt% of the polymer binder.

(2) Preparation of Composition for Forming a Gel Polymer Electrolyte

After dissolving the lithium salt LiFSI in a non-aqueous organic solvent prepared by mixing ethylene carbonate (EC) and ethyl methyl carbonate (EMC) in a volume ratio of 3:7 to a concentration of 1 M, 10 parts by weight of tetraethylene glycol diacrylate as a multifunctional acrylate-based compound and 0.1 parts by weight of azobisisobutyronitrile as a polymerization initiator were added based on 100 parts by weight of the total weight of the composition to prepare a composition for forming a gel polymer electrolyte.

(3) Preparation of Anode Part

An anode plate in which lithium metal was deposited to a thickness of 2 $\mu$m on a Cu foil was prepared. The anode plate was punched out to a size of 31 x 43 mm to prepare an anode part.

(4) Preparation of Cathode Part

A slurry uniformly dispersed was prepared by putting a mixture consisting of 94 wt% of $LiNiCoMnO_2$ (Ni:Co:Mn=8:1:1) as a cathode active material, 3 wt% of conductive carbon black (Super P; IMERYS Graphite & Carbon) as a conductive agent, and 3 wt% of polyvinylidene fluoride as a binder into NMP. The slurry was coated on one surface of an aluminum current collector, and this was dried and rolled to prepare a cathode plate on which a cathode active material layer was stacked. The cathode plate was punched out to a size of 30 x 42 mm using a mold punching machine to prepare a cathode part.

(5) Preparation of Lithium Secondary Battery

The anode part, the separator, and the cathode part were stacked in sequence and subjected to pressure lamination at 90 °C to prepare an electrode assembly. The electrode assembly was housed in a pouch, and the composition for forming a gel polymer electrolyte was injected therein. Subsequently, a polymerization reaction of the composition was carried out for 5 hours in a 50 °C chamber to form a gel polymer electrolyte.

Example 2

A lithium secondary battery was manufactured in the same manner as in Example 1, except that the preparation of the separator was performed by the following method.
Lithium aluminum titanium phosphate ($Li_xAl_yTi_z(PO_4)_3$, 0<x<2, 0<y<1, 0<z<3; manufacturer Ganfeng Lithium; angular particles; D50=300nm) was prepared as first inorganic fine particles. A dispersion liquid was prepared by dispersing 10 g of the first inorganic fine particles in N-methyl-2-pyrrolidone (NMP). Poly(vinylidene fluoride-co-hexafluoropropylene) was added as a polymer binder to the dispersion liquid and uniformly mixed using a homogenizer, thereby preparing a first slurry with a solid content of 40%.

Boehmite (AIO(OH); manufacturer Boyaun; acicular particles with an aspect ratio of 5.2; D50=155nm) was prepared as second inorganic fine particles. A dispersion liquid was prepared by dispersing 10 g of the second inorganic fine particles in N-methyl-2-pyrrolidone (NMP). Poly(vinylidene fluoride-co-hexafluoropropylene) was added as a polymer binder to the dispersion liquid and uniformly mixed using a homogenizer, thereby preparing a second slurry with a solid content of 40%.

The first slurry (temperature of the slurry 25°C) was applied onto a porous polyethylene substrate with a thickness of 9 $\mu$m (manufacturer: Senior) using a dual slot die. A first porous coating layer with a thickness of 4.5 $\mu$m was formed through a drying process of vaporizing the solvent at 80 °C for 15 minutes. The second slurry (temperature of the slurry 25°C) was applied onto the first porous coating layer using a dual slot die. A second porous coating layer with a thickness of 1.5 $\mu$m was formed through a drying process of vaporizing the solvent at 80 °C for 15 minutes. In each of the drying processes, air with a wind speed of 2.0 m/s was supplied in a direction parallel to the coating surface.

The composition of each of the first and second porous coating layers consisted of a ratio of 90 wt% of the inorganic fine particles and 10 wt% of the polymer binder.

Example 3

A lithium secondary battery was manufactured in the same manner as in Example 1, except that lithium titanium phosphate ($Li_xTi_y(PO_4)_3$, 0<x<2, 0<y<3; manufacturer Tokyo Chemical Industry Co.; angular particles; D50=350nm) was used instead of lithium aluminum titanium phosphate ($Li_xAl_yTi_z(PO_4)_3$) as the first inorganic fine particles.

Example 4

A lithium secondary battery was manufactured in the same manner as in Example 2, except that $Al_2O_3$ particles (manufacturer Boyaun; acicular particles with an aspect ratio of 5.5; D50=160nm) were used instead of boehmite (AIO(OH)) as the second inorganic fine particles.

Comparative Example 1

A lithium secondary battery was manufactured in the same manner as in Example 1, except that the second inorganic fine particles were not added during the preparation of the separator. It was confirmed that the separator according to Comparative Example 1 had a porous coating layer with a thickness of 6 $\mu$m comprising the lithium aluminum titanium phosphate formed on the porous polyethylene substrate.

Comparative Example 2

A lithium secondary battery was manufactured in the same manner as in Example 1, except that the first inorganic fine particles were not added during the preparation of the separator. It was confirmed that the separator according to Comparative Example 2 had a porous coating layer with a thickness of 6 $\mu$m comprising the boehmite formed on the porous polyethylene substrate.

Comparative Example 3

A lithium secondary battery was manufactured in the same manner as in Example 1, except that a porous polyethylene substrate with a thickness of 9 $\mu$m (manufacturer: Senior) on which no porous coating layer was formed was used as the separator during the manufacturing of the lithium secondary battery.

Experimental Example 1

[1] A mixture of 7 g of lithium aluminum titanium phosphate (LATP) and 3 g of boehmite (AIO(OH)) used in the preparation of the separator of Example 1 was mixed with 10 g of the composition for forming a gel polymer electrolyte. A polymerization reaction of the composition was carried out for 5 hours in a 50 °C chamber to form a gel polymer electrolyte. It was vacuum-sealed and stored at 85 °C for 48 hours, after which the evolved gas was analyzed using gas chromatography.
[2] The same experiment as [1] above was conducted, except that 10 g of lithium aluminum titanium phosphate was used alone as the inorganic fine particles instead of the mixture of lithium aluminum titanium phosphate and boehmite.
[3] The same experiment as [1] above was conducted, except that 10 g of boehmite was used alone as the inorganic fine particles instead of the mixture of lithium aluminum titanium phosphate and boehmite.

[Table 1]

|  |  | Inorganic fine particles | | |
| --- | --- | --- | --- | --- |
|  |  | [1] LATP + AlO(OH) | [2] LATP | [3] AlO(OH) |
| Gas generation amount ($\mu$L) | $H_2$ | <1 | - | 2 |
|  | CO | 9 | - | 11 |
|  | $CO_2$ | 113 | 26 | 454 |
|  | $CH_4$ | <1 | <2 | <1 |
|  | $C_2H_2$ | - | - | - |
|  | $C_2H_4$ | <1 | <2 | <1 |
|  | $C_2H_6$ | <1 | <2 | <1 |
|  | $C_3H_6$ | - | - | 2 |
|  | $C_3H_8$ | <1 | <2 | <1 |
|  | $\Sigma$ | 122 | 26 | 469 |

Referring to Table 1, the total amount of gas generation ($\Sigma$) was lowest in the case where lithium aluminum titanium phosphate (LATP) was applied alone, and highest in the case where boehmite (AlO(OH)) was applied alone. In the case where a mixture of lithium aluminum titanium phosphate (LATP) and boehmite (AlO(OH)) was applied, it was confirmed that the amount of gas generation was significantly reduced compared to the case where boehmite was applied alone.

Experimental Example 2

For the lithium secondary batteries according to the Examples and Comparative Examples, cycling was performed at 45 °C. Charge was conducted by constant current-constant voltage to 4.25 V at 0.1 C, followed by constant current discharge to 2.5 V, with a 20-minute rest between charge and discharge. Formation capacity and charge-discharge capacity were then measured.

[Table 2]

|  | Example 1 | | Example 2 | |
| --- | --- | --- | --- | --- |
|  | 1st cycle | 2nd cycle | 1st cycle | 2nd cycle |
| Charge capacity (mAh) | 5.70 | 5.31 | 5.72 | 5.33 |
| Discharge capacity (mAh) | 5.23 | 5.28 | 5.25 | 5.30 |
| C.E. (%) | 91.75 | 99.44 | 91.78 | 99.44 |

[Table 3]

|  | Example 3 | | Example 4 | |
| --- | --- | --- | --- | --- |
|  | 1st cycle | 2nd cycle | 1st cycle | 2nd cycle |
| Charge capacity (mAh) | 5.69 | 5.30 | 5.70 | 5.32 |
| Discharge capacity (mAh) | 5.22 | 5.27 | 5.23 | 5.29 |
| C.E. (%) | 91.74 | 99.43 | 91.75 | 99.44 |

[Table 4]

|  | Comparative Example 1 | | Comparative Example 2 | | Comparative Example 3 | |
| --- | --- | --- | --- | --- | --- | --- |
|  | 1st cycle | 2nd cycle | 1st cycle | 2nd cycle | 1st cycle | 2nd cycle |
| Charge capacity (mAh) | 5.77 | 5.27 | 5.76 | 5.26 | 5.68 | 5.20 |

(continued)

|  | Comparative Example 1 | | Comparative Example 2 | | Comparative Example 3 | |
|---|---|---|---|---|---|---|
|  | 1st cycle | 2nd cycle | 1st cycle | 2nd cycle | 1st cycle | 2nd cycle |
| Discharge capacity (mAh) | 5.29 | 5.23 | 5.27 | 5.21 | 5.20 | 5.16 |
| C.E. (%) | 91.57 | 99.24 | 91.49 | 99.05 | 91.54 | 99.29 |

Referring to Tables 2 to 4, the Coulombic efficiency (C.E.) of the first cycle was generally low due to side reactions of the polymerization initiator and an increase in ion resistance, but the Coulombic efficiency improved from the second cycle onwards. In the lithium secondary batteries of the Examples, dendrite growth was inhibited, demonstrating relatively excellent cycle performance.

Experimental Example 3

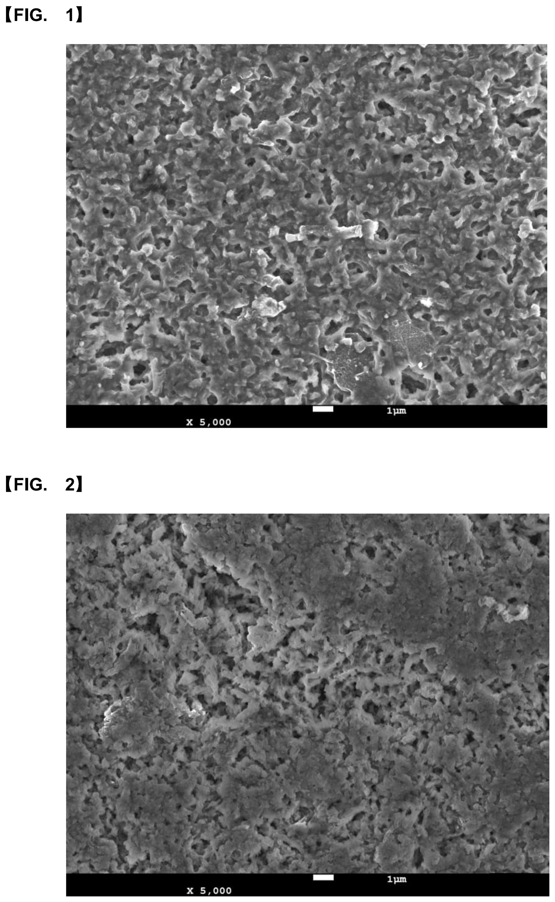

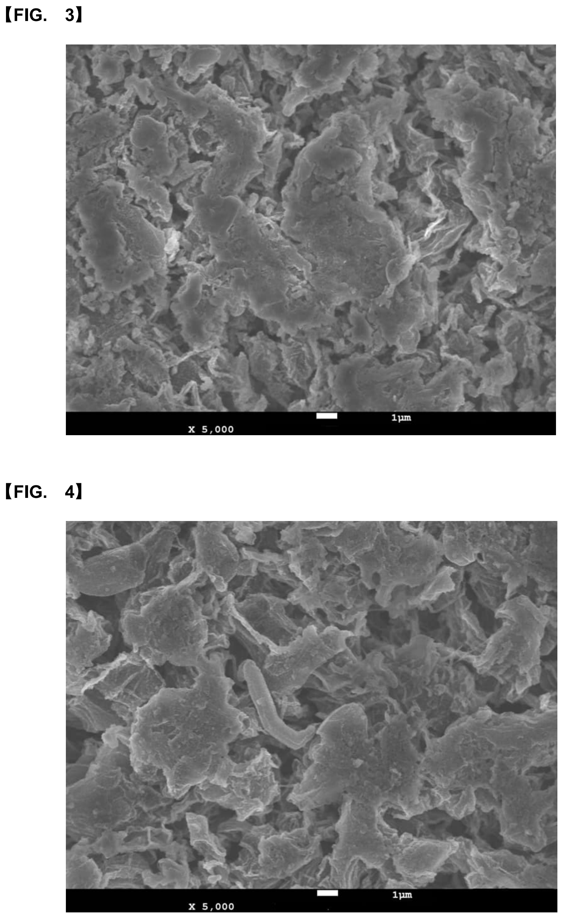

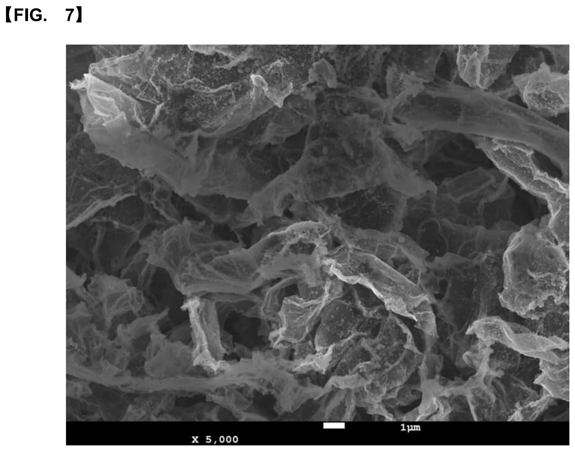

After 50 cycles, performed according to the method of Experimental Example 2, the anode surface of the lithium secondary battery was observed using a scanning electron microscope. The images are shown in FIGs. 1 to 7.

Referring to FIGs. 1 to 4, it was confirmed that in the lithium secondary batteries according to Examples 1 to 4, the growth of dendrites on the surface of the anode was inhibited.

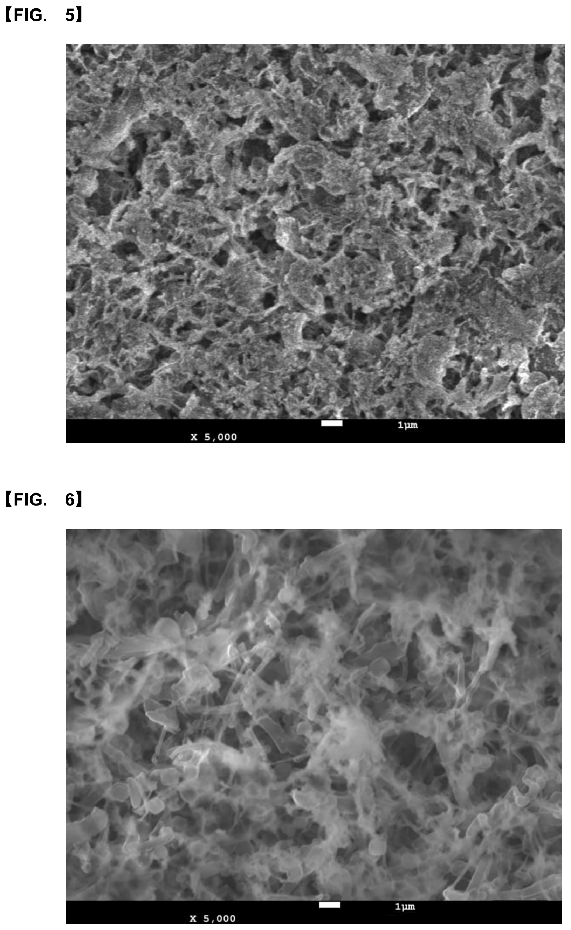

In contrast, referring to FIGs. 5 to 7, it was confirmed that in the lithium secondary batteries according to Comparative Examples 1 to 3, a large amount of dendrites had grown on the surface of the anode or were in a state prone to growth.

Although the present invention has been described with reference to limited embodiments, it is not limited thereto, and various modifications and alterations may be made by those skilled in the art within the scope of the inventive concept of the present invention and equivalents defined by the claims below.

**Claims**

1. A gel polymer electrolyte - separator composite for an electrochemical device, comprising:

   a porous polymer substrate,
   a plurality of porous coating layers stacked in sequence on the porous polymer substrate, and
   a gel polymer electrolyte impregnated into the porous polymer substrate and the porous coating layers;
   wherein the plurality of porous coating layers comprise:

   a porous coating layer comprising at least one type of first inorganic fine particles selected from the group consisting of lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), $(LiAlTiP)_xO_y$-based glass ($0<x<4$, $0<y<13$), lithium lanthanum titanate ($Li_xLa_yTiO_3$, $0<x<2$, $0<y<3$), lithium germanium thiophosphate ($Li_xGe_yP_zS_w$, $0<x<4$, $0<y<1$, $0<z<1$, $0<w<5$), and $SiS_2$-based glass ($Li_xSi_yS_z$, $0<x<3$, $0<y<2$, $0<z<4$), and
   a porous coating layer comprising at least one type of second inorganic fine particles selected from the group consisting of $SrTiO_3$, $SnO_2$, $CeO_2$, $MgO$, $NiO$, $CaO$, $ZnO$, $ZrO_2$, $Y_2O_3$, $Al_2O_3$, boehmite ($AlO(OH)$), $Al(OH)_3$, $TiO_2$, $SiC$, and $BaTiO_3$.

2. The gel polymer electrolyte - separator composite for an electrochemical device according to Claim 1, wherein

   the first inorganic fine particles are angular particles, granular particles, or spheroidal particles, and
   the second inorganic fine particles are acicular particles having an aspect ratio in a range of 5 to 10.

3. The gel polymer electrolyte - separator composite for an electrochemical device according to Claim 1, comprising:

   the porous polymer substrate;
   a first porous coating layer stacked on the porous polymer substrate and comprising the first inorganic fine particles;
   a second porous coating layer stacked on the first porous coating layer and comprising the second inorganic fine particles; and
   the gel polymer electrolyte impregnated into the porous polymer substrate and the porous coating layers.

4. The gel polymer electrolyte - separator composite for an electrochemical device according to Claim 1, wherein the plurality of porous coating layers each comprise a polymer binder and inorganic fine particles dispersed in the polymer binder.

5. The gel polymer electrolyte - separator composite for an electrochemical device according to Claim 4, wherein the polymer binder is at least one compound selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butyl acrylate, polymethyl methacrylate, polyacrylonitrile, polyvinylpyrrolidone, and polyvinyl acetate.

6. The gel polymer electrolyte - separator composite for an electrochemical device according to Claim 4, wherein the plurality of porous coating layers each comprise 1 to 90 wt% of the polymer binder and 10 to 99 wt% of the inorganic fine particles.

7. The gel polymer electrolyte - separator composite for an electrochemical device according to Claim 1, wherein the porous polymer substrate comprises at least one polymer selected from the group consisting of polyethylene, polypropylene, polyethylene terephthalate, polypropylene terephthalate, polybutylene terephthalate, polyester, polyacetal, polyamide, polycarbonate, polyimide, polyamide-imide, polyetherimide, polyetheretherketone, polyethersulfone, polyphenylene oxide, polyphenylene sulfide, and polyethylene naphthalate.

8. The gel polymer electrolyte - separator composite for an electrochemical device according to Claim 1, wherein the gel polymer electrolyte comprises a lithium salt, a matrix gel polymer, and a non-aqueous organic solvent.

9. The gel polymer electrolyte - separator composite for an electrochemical device according to Claim 8, wherein the lithium salt is at least one compound selected from the group consisting of $LiBF_4$, $LiPF_6$, $LiSbF_6$, $LiAsF_6$, $LiOH$, $LiOH \cdot H_2O$, LiBOB, $LiAlO_4$, $LiAlCl_4$, $LiCF_3SO_3$, $LiC_4F_9SO_3$, $LiN(C_2F_5SO_2)_2$, $LiN(CF_3SO_2)_2$, $LiC(CF_3SO_2)_3$, $LiC_4BO_3$, LiTFSI, LiFSI, LiCl, LiI, $LiB(C_2O_4)_2$, and $LiClO_4$.

10. The gel polymer electrolyte - separator composite for an electrochemical device according to Claim 8, wherein the matrix gel polymer is one formed into a three-dimensional gel network structure by polymerization among multifunctional acrylate-based compounds.

11. The gel polymer electrolyte - separator composite for an electrochemical device according to Claim 10, wherein the multifunctional acrylate-based compound is at least one compound selected from the group consisting of tetraethylene glycol diacrylate, trimethylolpropane ethoxylate triacrylate, trimethylolpropane propoxylate triacrylate, polyethylene glycol diacrylate, polyethylene glycol dimethacrylate, polyester dimethacrylate, trimethylolpropane trimethacrylate, ethoxylated bisphenol A dimethacrylate, 1,4-butanediol diacrylate, 1,6-hexanediol diacrylate, ditrimethylolpropane tetraacrylate, pentaerythritol tetraacrylate, pentaerythritol ethoxylate tetraacrylate, dipentaerythritol pentaacrylate, and dipentaerythritol hexaacrylate.

12. The gel polymer electrolyte - separator composite for an electrochemical device according to Claim 8, wherein the non-aqueous organic solvent is at least one compound selected from the group consisting of methyl acetate, ethyl acetate, $\gamma$-butyrolactone, $\epsilon$-caprolactone, dibutyl ether, tetrahydrofuran, cyclohexanone, benzene, fluorobenzene, dimethyl carbonate, diethyl carbonate, dipropyl carbonate, methylpropyl carbonate, ethylpropyl carbonate, ethylmethyl carbonate, ethylene carbonate, propylene carbonate, butylene carbonate, ethyl alcohol, isopropyl alcohol, dimethylformamide, 1,3-dioxolane, dimethyl sulfone, sulfolane, and triethylene glycol dimethyl ether.

13. An electrochemical device comprising the gel polymer electrolyte - separator composite according to claim 1.

14. The electrochemical device according to claim 13, comprising a cathode, an anode, and the gel polymer electrolyte - separator composite interposed between the cathode and the anode.

15. The electrochemical device according to claim 14, wherein the anode comprises lithium metal or an alloy of lithium metal.

16. The electrochemical device according to claim 13, wherein the electrochemical device is a lithium secondary battery.

【FIG. 1】

【FIG. 2】

【FIG. 3】

【FIG. 4】

【FIG. 5】

【FIG. 6】

【FIG. 7】

## INTERNATIONAL SEARCH REPORT

International application No.

**PCT/KR2025/007942**

### A. CLASSIFICATION OF SUBJECT MATTER

**H01M 10/0565**(2010.01)i; **H01M 50/451**(2021.01)i; **H01M 50/446**(2021.01)i; **H01M 50/417**(2021.01)i; **H01M 50/431**(2021.01)i; **H01M 10/052**(2010.01)i; **H01M 10/0585**(2010.01)i

According to International Patent Classification (IPC) or to both national classification and IPC

### B. FIELDS SEARCHED

Minimum documentation searched (classification system followed by classification symbols)

H01M 10/0565(2010.01); H01M 10/052(2010.01); H01M 2/16(2006.01); H01M 4/02(2006.01); H01M 50/40(2021.01); H01M 50/409(2021.01); H01M 50/446(2021.01); H01M 50/491(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 다공성 (porous), 고분자 기재 (polymer substrate), 코팅층 (coating layer), 겔 폴리머 전해질 (gel polymer electrolyte), 무기 입자 (inorganic particles), 각상 (angular), 입상 (granular), 구상 (spherical), 침상 (acicular), 매트릭스 (matrix), 아크릴레이트 (acrylate)

### C. DOCUMENTS CONSIDERED TO BE RELEVANT

| Category* | Citation of document, with indication, where appropriate, of the relevant passages | Relevant to claim No. |
|---|---|---|
| Y | KR 10-2019-0083894 A (LG CHEM, LTD.) 15 July 2019 (2019-07-15)<br>claims 1, 4, 5, 11; paragraphs [0012]-[0018], [0030]-[0040], [0042], [0058]-[0061] | 1-16 |
| Y | KR 10-2018-0036573 A (LG CHEM, LTD.) 09 April 2018 (2018-04-09)<br>claims 1, 3-5; paragraphs [0057]-[0060], [0062]-[0067], [0087] | 1-16 |
| Y | US 2024-0047822 A1 (ALSYM ENERGY, INC.) 08 February 2024 (2024-02-08)<br>claim 1; paragraphs [0039], [0098] | 2 |
| A | JP 2009-070797 A (SANYO ELECTRIC CO., LTD.) 02 April 2009 (2009-04-02)<br>abstract; claims 1-13 | 1-16 |
| A | KR 10-2020-0107406 A (SAMSUNG SDI CO., LTD. et al.) 16 September 2020 (2020-09-16)<br>abstract; claims 1-11 | 1-16 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 September 2025** | **10 September 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

21

## INTERNATIONAL SEARCH REPORT
### Information on patent family members

International application No.

**PCT/KR2025/007942**

| Patent document cited in search report | | | Publication date (day/month/year) | Patent family member(s) | | | Publication date (day/month/year) |
|---|---|---|---|---|---|---|---|
| KR | 10-2019-0083894 | A | 15 July 2019 | CN | 110574190 | A | 13 December 2019 |
| | | | | CN | 110574190 | B | 13 May 2022 |
| | | | | EP | 3614459 | A1 | 26 February 2020 |
| | | | | EP | 3614459 | A4 | 27 May 2020 |
| | | | | EP | 3614459 | B1 | 30 October 2024 |
| | | | | EP | 4443633 | A2 | 09 October 2024 |
| | | | | EP | 4443633 | A3 | 11 December 2024 |
| | | | | ES | 3000513 | T3 | 28 February 2025 |
| | | | | HU | E069116 | T2 | 28 February 2025 |
| | | | | JP | 2020-522097 | A | 27 July 2020 |
| | | | | KR | 10-2263460 | B1 | 11 June 2021 |
| | | | | PL | 3614459 | T3 | 13 January 2025 |
| | | | | US | 11189885 | B2 | 30 November 2021 |
| | | | | US | 2020-0152945 | A1 | 14 May 2020 |
| | | | | WO | 2019-135510 | A1 | 11 July 2019 |
| KR | 10-2018-0036573 | A | 09 April 2018 | CN | 109155427 | A | 04 January 2019 |
| | | | | CN | 109155427 | B | 05 April 2022 |
| | | | | EP | 3442068 | A1 | 13 February 2019 |
| | | | | EP | 3442068 | A4 | 07 August 2019 |
| | | | | EP | 3442068 | B1 | 13 September 2023 |
| | | | | JP | 2019-516218 | A | 13 June 2019 |
| | | | | JP | 6732299 | B2 | 29 July 2020 |
| | | | | KR | 10-1990617 | B1 | 18 June 2019 |
| | | | | US | 11322777 | B2 | 03 May 2022 |
| | | | | US | 2019-0140318 | A1 | 09 May 2019 |
| | | | | WO | 2018-062882 | A1 | 05 April 2018 |
| US | 2024-0047822 | A1 | 08 February 2024 | CN | 119948663 | A | 06 May 2025 |
| | | | | EP | 4566112 | A1 | 11 June 2025 |
| | | | | KR | 10-2025-0044749 | A | 01 April 2025 |
| | | | | WO | 2024-030607 | A1 | 08 February 2024 |
| JP | 2009-070797 | A | 02 April 2009 | JP | 5219621 | B2 | 26 June 2013 |
| | | | | US | 2009-0053609 | A1 | 26 February 2009 |
| KR | 10-2020-0107406 | A | 16 September 2020 | KR | 10-2383075 | B1 | 04 April 2022 |
| | | | | US | 2022-0140441 | A1 | 05 May 2022 |
| | | | | WO | 2020-179977 | A1 | 10 September 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240077201

- KR 1020250075673